# EUROPÄISCHE PATENTANMELDUNG

(11) **EP 1 367 479 A2**
(43) Veröffentlichungstag der Anmeldung: **03.12.2003**
(21) Anmeldenummer: 03010696.7
(22) Anmeldetag: 13.05.2003
(51) Int. Cl.: G06F 1/20

(54) **Aufbaukonzept für einen Tower-PC**

(30) Priorität: 31.05.2002 DE 10224273
(71) Anmelder: Fujitsu Siemens Computers GmbH, 81739 München (DE)
(72) Erfinder: Schmid, Michael, 89407 Dillingen (DE)
(74) Vertreter: Epping Hermann & Fischer

(57) **Zusammenfassung**

Die Erfindung betrifft ein Aufbaukonzept für einen Tower-PC, durch ein an einer Seitenwandung (12) ausgebildetes Luftgitter im Bereich der Stromversorgung eine wesentlich effizientere Kühlung erzielt wird.

## Beschreibung

Die Erfindung betrifft ein Aufbaukonzept für einen Tower-PC mit einem Motherboard, einem Mikroprozessor und einer Stromversorgung mit Lüfter in einem Computergehäuse.

Bisher sind die meisten Tower-PCs so ausgelegt, daß die Kühlluft an der Frontseite des P_{CS} angesaugt und und durch einen Lüfter in der Stromversorgung an der Rückseite abgeblasen wird.

Durch die immer leistungsfähiger werdenden Komponenten, wie Harddisks und Prozessoren, steigt auch die Wärmeentwicklung innerhalb des PCs.

In einigen Fällen wird daher dazu übergegangen, an der Rückseite einen zusätzlichen Lüfter zur Kühlung zu integrieren.

Ebenfalls werden spezielle Lüfter auf den Prozessoren eingesetzt.

Die zusätzlichen Lüfter steigern zum einen die Herstellungskosten, steigern die Lärmbelastung durch den PC und es sinkt die MTBT (Lebensdauer).

Aufgabe der Erfindung ist es daher, eine alternative Lösung vorzuschlagen, durch welche ein Tower-PC effektiver gekühlt werden kann.

Erfindungsgemäß wird diese Aufgabe dadurch gelöst, daß das Computergehäuse seitlich ein Lüftungsgitter im Bereich der Stromversorgung aufweist.

Da dieses Lüftungsgitter wesentlich größer als an der Rückseite des PCs ausgebildet werden kann, steht ein wesentlich größerer Querschnitt für den Luftaustritt zur Verfügung, so daß die gesamte Kühlung für den Innenraum des PCs wesentlich effektiver gestaltet werden kann.

Eine maximale Kühlung kann dadurch erreicht werden, daß das Lüftungsgitter über die gesamte Breitseite der Stromversorgung ausgebildet ist.

An der Rückseite ist unterhalb der Stromversorgung vorteilhafterweise wie bei bisher bekannten Modellen ein Luftauslaß vorgesehen, wobei an diesem ebenfalls zur Effizienzsteigerung ein Lüfter angeordnet werden kann, welcher die Luft nach außen preßt.

Nachfolgend wird die Erfindung anhand eines in den Zeichnungen dargestellten Ausführungsbeispieles näher beschrieben.

In den Zeichnungen zeigen:
- Figur 1: eine Seitenansicht eines seitlich geöffneten Computergehäuses,
- Figur 2: das geschlossene Computergehäuse in Seitenansicht und
- Figur 3: eine Rückansicht des Computergehäuses gemäß Figur 1.

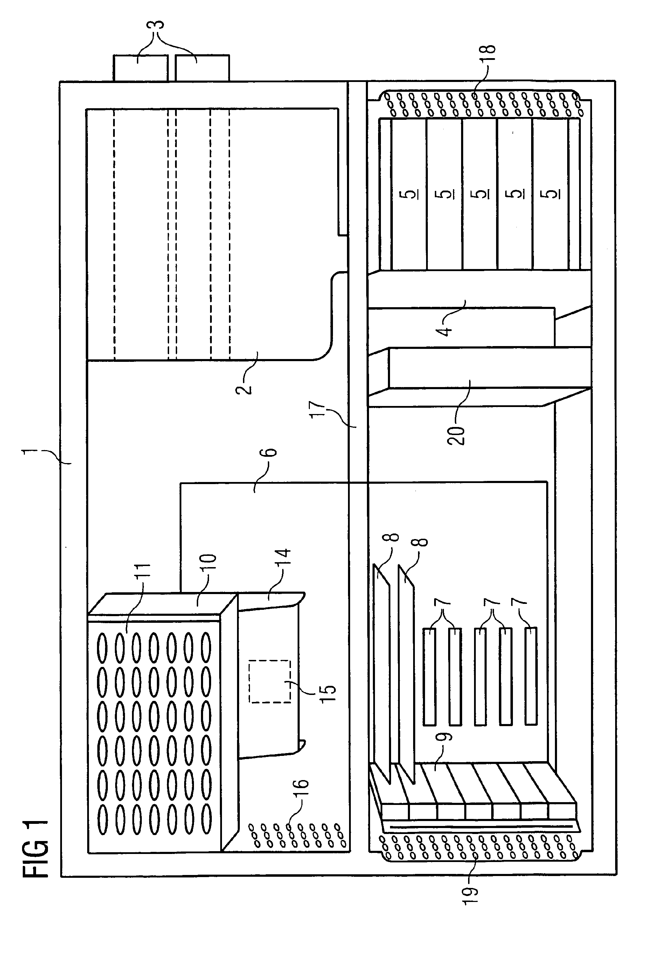

Figur 1 zeigt in Seitenansicht ein Computergehäuse 1 eines Tower-PCs, in welchem im vorderen Bereich ein Einbaukäfig 2 für 5 1/4"-Laufwerke 3 und darunter ein Einbaukäfig 4 für 3 1/2"-Laufwerke 5 angeordnet ist. Der Einbaukäfig 4 für die 3 1/2"-Laufwerke 5 ist quer zum oberen Einbaukäfig 2 angeordnet, so daß die 3 1/2"-Laufwerke bei abgenommener Seitenwandung quer eingeschoben werden können. Als 3 1/2"-Laufwerke werden in der Regel an dieser Stelle die Festplatten eingebaut.

Hinter den beiden Einbaukäfigen 2 und 4 ist an der dahinterliegenden Seitenwandung im wesentlichen senkrecht das Motherboard 6 angeordnet, welches in seinem unteren Bereich eine Reihe von Steckplätzen 7 für Steckkarten 8 aufweist.

Die Steckkarten 8 sind somit waagrecht angeordnet und an der Rückseite des Computergehäuses 1 an einem Slotfeld 9 festgelegt. In der oberen Hälfte des Computergehäuses 1 befindet sich an der oberen Rückseite eine Stromversorgung 10, wobei diese exakt hinter der abgenommenen Seitenwandung des Computergehäuses 1 angeordnet ist. Die Stromversorgung 10 weist ein Lüftungsgitter 11 auf, welches zur abgenommenen Seitenwandung hin weist. Hinter dem Lüftungsgitter 11 ist ein nicht dargestellter Ventilator beziehungsweise Lüfter angeordnet.

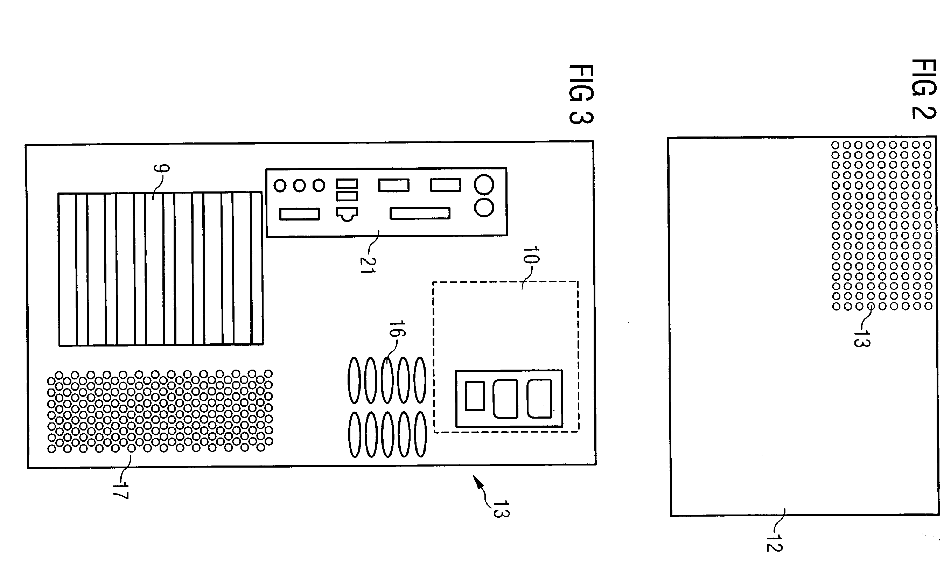

Figur 2 zeigt eine Seitenwandung 12, wie sie für das in Figur 1 dargestellte Computergehäuse verwendet werden kann. Die Seitenwandung 12 zeichnet sich dadurch aus, daß sie im Bereich der Stromversorgung 10 beziehungsweise des Lüftungsgitters 11 der Stromversorgung 10 ebenfalls ein Lüftungsgitter 13 beziehungsweise eine Luftansaugmöglichkeit aufweist, welche vorzugsweise über die gesamte Breitseite der Stromversorgung 10 ausgebildet ist.

Durch den Effekt, daß eine wesentlich größere Fläche durch das Lüftungsgitter 13 beziehungsweise 11 zum Luftaustritt der Stromversorgung 10 zur Verfügung steht, kann ein wesentlich größerer Volumenstrom über die Stromversorgung beziehungsweise den Lüfter der Stromversorgung 10 aus dem Innenraum des PCs abgeblasen werden, wodurch die Kühleffizienz steigt.

Die große Ausbildung des Lüftungsgitters 11 an der Stromversorgung beziehungsweise des Lüftungsgitters 13 an der abnehmbaren Seitenwandung bringt den weiteren Vorteil mit sich, daß auch nebeneinander zwei Lüfter innerhalb der Stromversorgung angeordnet werden können.

Im gemäß Figur 1 dargestellten Ausführungsbeispiel ist an der Stromversorgung 10 eine Luftleithaube 14 angeschlossen, welche sich über einen nur gestrichelt dargestellten Prozessor 15 auf dem Motherboard 6 erstreckt.

Im dargestellten Ausführungsbeispiel kann somit auf einen Lüfter oberhalb des Prozessors bei der derzeitigen Wärmeentwicklung von Prozessoren verzichtet werden, da passiv über die Stromversorgung eine genügende Kühlwirkung erzielt wird.

Für den Kühlluftaustritt ist wie üblich unterhalb der Stromversorgung 10 ein weiteres Lüftungsgitter 16 angeordnet.

Um die Hitzentwicklung der Festplatten, welche in der Regel im Einbaukäfig 4 als 3 1/2"-Komponenten eingebaut werden, vom Prozessor zu trennen, weist der Computer ein Airshield 17 auf, welcher zwischen den Einbaukäfigen 2 und 4 angeordnet ist, sich über die gesamte Breite sowie Länge des Computers erstreckt und somit den Raum mit der Stromversorgung sowie dem Teil des Motherboards, auf dem sich der Prozessor 15 befindet, von den 3 1/2"-Laufwerken 5 sowie den Steckkarten 8 trennt.

Um für die 3 1/2"-Laufwerke 5 sowie Steckkarten 8 eine ausreichende Kühlung zu gewährleisten, ist an der Frontseite des Computergehäuses ein Lüftungsgitter 18 sowie an der Rückseite des Computergehäuses ein Lüftungsgitter 19 neben dem Slotfeld 9 ausgebildet.

Unterhalb des Airshieldes 17 ist entweder zwischen dem Einbaukäfig 4 für die 3 1/2"-Komponenten und den Steckkarten 8 oder alternativ auch zwischen dem Einbaukäfig 4 und der Frontseite des Computergehäuses 1 ein Lüfter 20 angeordnet, welcher einen Luftstrom für den Bereich unterhalb des Airshieldes 17 generiert.

Figur 3 zeigt die Rückseite des Computergehäuses gemäß Figur 1, wobei die Stromversorgung 10 nur gestrichelt dargestellt ist.

Unterhalb der Stromversorgung 10 ist wie bereits in Figur 1 dargestellt, ein Lüftungsgitter 16 für den Luftauslaß im oberen Bereich und neben dem Slotfeld 9 ein weiteres Lüftungsgitter 17 für den Luftein- beziehungsweise -auslaß für den Bereich unterhalb des Airshieldes 17 dargestellt.

Oberhalb des Slotfeldes 9 ist ein Steckerfeld 21 für die Anschlüsse von externen Geräten angeordnet.

### Bezugszeichenliste

- 1: Computergehäuse
- 2: Einbaukäfig
- 3: 5 1/4"-Laufwerke
- 4: Einbaukäfig
- 5: 3 1/2"-Laufwerke
- 6: Motherboard
- 7: Steckplätze
- 8: Steckkarten
- 9: Slotfeld
- 10: Stromversorgung
- 11: Lüftungsgitter
- 12: Seitenwandung
- 13: Lüftungsgitter
- 14: Luftleithaube
- 15: Prozessor
- 16: Luftungsgitter
- 17: Airshield
- 18: Lüftungsgitter
- 19: Lüftungsgitter
- 20: Lüfter

## Patentansprüche

1. Aufbaukonzept für einen Tower-PC mit einem Motherboard (6), einem Prozessor (15) und einer Stromversorgung (10) mit Lüfter in einem Computergehäuse (1),
**dadurch gekennzeichnet, daß**
das Computergehäuse (1) seitlich ein Lüftungsgitter (13) im Bereich der Stromversorgung (10) aufweist.

2. Aufbaukonzept für einen Tower-PC nach Anspruch 1,
**dadurch gekennzeichnet, daß**
das Lüftungsgitter (13) über die gesamte Breitseite der Stromversorgung (10) ausgebildet ist.

3. Aufbaukonzept für einen Tower-PC nach Anspruch 1 oder 2,
**dadurch gekennzeichnet, daß**
das Computergehäuse (1) an der Rückseite unterhalb der Stromversorgung (10) einen Lufttungsgitter (14) aufweist.

4. Aufbaukonzept für einen Tower-PC,
**dadurch gekennzeichnet, daß**
an der Stromversorgung (10) eine Luftleithaube (14) angeschlossen ist, über welche der Prozessor (15) passiv kühlbar ist.

5. Aufbaukonzept für einen Tower-PC nach einem der Ansprüche 1 bis 4,
**dadurch gekennzeichnet, daß**
der Innenraum des Computergehäuses (1) durch ein Airshield (17) unterteilt ist, so daß wärmeerzeugende Komponenten, wie z.B. Festplatten in Form von 3 1/2"-Laufwerken (5) oder Steckkarten (8) von der Stromversorgung (10) der Luftleithaube (14) und dem Prozessor (15) kühllufttechnisch abgetrennt sind.

6. Aufbaukonzept für einen Tower-PC nach Anspruch 5,
**dadurch gekennzeichnet, daß**
unterhalb des Airshieldes (17) das Computergehäuse (1) sowohl an der Frontseite wie an der Rückseite ein Lüftungsgitter (18, 19) aufweist und zwischen diesen beiden Lüftungsgittern innerhalb des Computergehäuses (1) ein Lüfter (20) angeordnet ist, welcher für einen Kühlluftstrom zur Kühlung der 3 1/2"-Komponenten (5) sowie der Steckkarten (8) sorgt.
